# EUROPEAN PATENT APPLICATION

(11) **EP 4 614 918 A1**
(43) Date of publication of application: **10.09.2025**
(21) Application number: 23885399.8
(22) Date of filing: 22.09.2023
(51) Int. Cl.: H04L 41/0873, H04L 43/08, H04L 45/42

(54) **SDN NETWORK SYSTEM, SDN CONTROLLER, AND CONTROL METHOD FOR SDN NETWORK SYSTEM**

(30) Priority: 01.11.2022 JP 2022175586
(71) Applicant: TOYOTA JIDOSHA KABUSHIKI KAISHA, Toyota-shi Aichi 471-8571 (JP)
(72) Inventor: YAMASAKI Yasuhiro, Toyota-shi, Aichi 471-8571 (JP); GOTO Hideki, Toyota-shi, Aichi 471-8571 (JP); OTAKE Ikuyoshi, Toyota-shi, Aichi 471-8571 (JP)
(74) Representative: J A Kemp LLP
(86) International application number: PCT/JP2023/034467
(87) International publication number: WO 2024/095635

(57) **Abstract**

Provided are an SDN network system (50), an SDN controller (51), and a control method for the SDN network system (50). A first test process (S81A) involves transmitting test data from the SDN controller (51) to an SDN switch (53) through a normal path. A determination process (S83) involves, on condition that no communication error has been detected in the normal path in the first test process (S81A), determining that no communication error occurs in communication setting (S83: NO).

## Description

### TECHNICAL FIELD

The present disclosure relates to an SDN system and an SDN controller. The present disclosure further relates to a control method for an SDN system.

### BACKGROUND

Patent Literature 1 discloses a software defined network (SDN) system. In the SDN, the communication settings of the network can be reconfigured. The SDN system includes SDN switches and an SDN controller that reconfigures the communication settings of each SDN switch.

### CITATION LIST

### Patent Literature

Patent Literature 1: Japanese Laid-Open Patent Publication No. 2017-169044

### SUMMARY OF INVENTION

### Technical Problem

There is room for improvement in the SDN system and the SDN controller. Further, there is room for improvement in the control method for the SDN system.

### Solution to Problem

An aspect of the present disclosure provides a SDN system for a vehicle. The SDN system includes an SDN switch and an SDN controller. The SDN controller includes control circuitry controls communication settings of the SDN switch. The SDN controller is configured to execute a transmission process that transmits test data and a determination process that determines whether a communication error has occurred during the transmission process in the communication settings. The SDN controller is configured to execute a permission process that permits transmission and reception of data other than the test data in the communication settings when the determination process determines that the communication error has not occurred. A normal path is a transmission path for the data and is defined by the communication settings. The transmission process includes a first test process. The first test process transmits the test data from the SDN controller to the SDN switch along the normal path. The determination process determines that the communication error in the communication settings has not occurred on condition that the communication error in the normal path has not been detected during the first test process.

Another aspect of the present disclosure provides a SDN controller that includes control circuitry. The control circuitry controls communication settings of an SDN switch. The control circuitry is configured to execute a transmission process that transmits test data and a determination process that determines whether a communication error has occurred during the transmission process in the communication settings. The control circuitry is configured to execute a permission process that permits transmission of data other than the test data in the communication settings when the determination process determines that the communication error has not occurred. A normal path is a transmission path for the data and is defined by the communication settings. The transmission process includes a first test process. The first test process transmits the test data from the SDN controller to the SDN switch along the normal path. The determination process determines that the communication error has not occurred in the communication settings on condition that the communication error in the normal path has not been detected during the first test process.

The above-described configurations allow the determination process to confirm that no communication error has occurred in the communication along the normal path. The transmission of data other than the test data is permitted based on the fact that no communication error has occurred in the communication along the normal path (i.e., based on the fact that communication can be normally performed in the normal path). Thus, when the communication settings are updated and then the data other than the test data is transmitted, the SDN network normally operates in the normal path with the communication settings.

There may be a case in which, for example, a new device may be connected to the SDN system described in the above-described literature. When the new device is connected, the communication settings of the SDN switch may also be updated. Immediately after the update of the communication settings of the SDN switch, the SDN network does not always operate normally. As a result, communication errors may occur. Such a risk is reduced by the above-described configurations.

### BRIEF DESCRIPTION OF DRAWINGS

Fig. 1 is a schematic diagram showing a communication system including vehicles.
Fig. 2 is a schematic diagram showing the vehicle controller of the vehicle shown in Fig. 1.
Fig. 3 is a flowchart illustrating a series of processes in an over-the-air (OTA) update program executed by the vehicle controller shown in Fig. 2.
Fig. 4 is a flowchart illustrating a series of processes of the test program executed by the SDN controller of the present disclosure as shown in Fig. 2.

### DESCRIPTION OF EMBODIMENTS

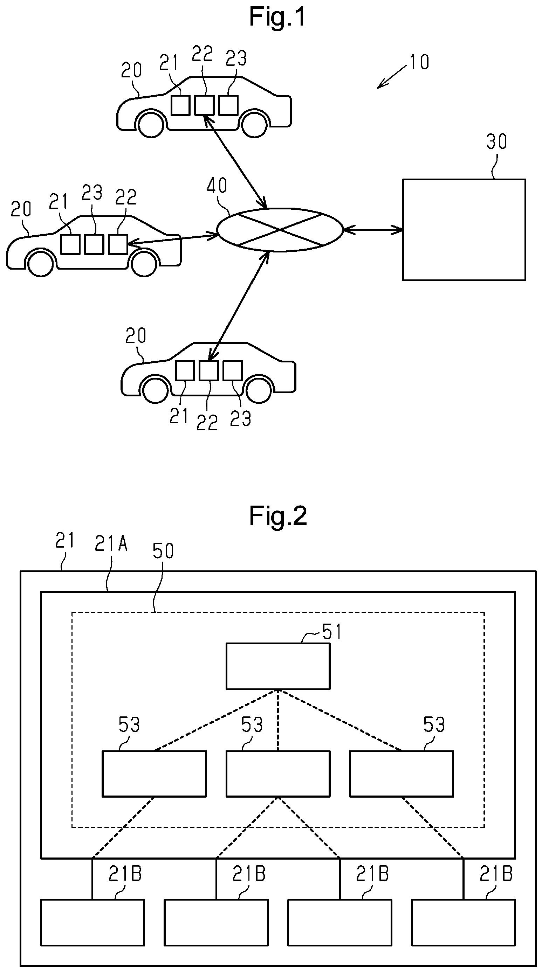

An SDN system, an SDN controller, and a control method for an SDN system according to an embodiment of the present disclosure will now be described. A communication system including vehicles and a server will now be described with reference to Figs. 1 to 4. At least one of the vehicles includes an SDN system.

### Outline of Communication System

As shown in Fig. 1, the communication system 10 includes vehicles 20 and the server 30. Each vehicle 20 includes a vehicle controller 21, a communication device 22, and an operation terminal 23. The vehicle controller 21 includes one or more control circuits that control each device of the vehicle 20. The vehicle controller 21 will be described in detail later.

The communication device 22 is connected to the server 30 via an external communication network 40. The external communication network 40 is, for example, a wireless communication network such as a mobile phone network. This allows the vehicle 20 and the server 30 to exchange information with each other via the external communication network 40.

The operation terminal 23 is operated by the user of the vehicle 20. The operation terminal 23 is, for example, a touch display. The operation terminal 23 displays an image indicating information that has been received from the vehicle controller 21. The operation terminal 23 sends information related to operation by the user to the vehicle controller 21.

Although not illustrated in the drawings, the server 30 includes a CPU and a ROM. The CPU of the server 30 executes programs stored in the ROM. Accordingly, the server 30 sends campaign information and distribution packages to the vehicles 20.

### Overview of Vehicle Controller

As shown in Fig. 2, the vehicle controller 21 includes a master ECU 21A and physical ECUs 21B. The master ECU 21A is connected to the physical ECUs 21B by communication lines. Although not illustrated in the drawings, the master ECU 21A and the physical ECUs 21B each include a CPU and a ROM. The ECUs (21A and 21B) execute the programs stored in the ROM. The physical ECUs 21B control hardware devices connected to the physical ECUs 21B. The hardware devices include, for example, an engine, brakes, and motors.

The master ECU 21A includes an SDN system 50. The SDN system 50 includes an SDN controller 51 and SDN switches 53.

The SDN controller 51 includes control circuitry that controls the communication settings of each SDN switch 53. Specifically, the SDN controller 51 defines data communication paths on the network of the SDN system 50. The SDN controller 51 determines a data communication path again, for example, when a new physical ECU 21B is connected. That is, the SDN controller 51 dynamically controls the communication settings. Further, the SDN controller 51 transmits path information or the like indicating data communication paths to each SDN switch 53. Thus, the SDN controller 51 centrally manages the communication settings of each SDN switch 53. Furthermore, the SDN controller 51 transmits, to the SDN switches 53, data to be forwarded by the SDN switches 53.

The SDN switches 53 execute data transfer on the network of the SDN system 50. Specifically, each SDN switch 53 updates the rules for data transfer stored in its flow table based on the path information received from the SDN controller 51. The SDN switches 53 transfer data received from the SDN controller 51 to an appropriate physical ECU 21B based on the updated rules.

Further, the SDN controller 51 is capable of executing a download process that downloads a software update from the server 30 located outside the vehicle 20. The SDN controller 51 installs and activates the software update downloaded by the download process. The series of processes allows the SDN controller 51 to execute the software update.

### Series of Processes Related to OTA

The server 30 transmits campaign information to the communication device 22 of each vehicle 20. When the communication device 22 of the vehicle 20 receives the campaign information, the communication device 22 outputs the campaign information to the vehicle controller 21. The vehicle controller 21 executes an update program via over-the-air (OTA) when receiving the campaign information. The campaign information indicates an event in which a software update is executed on a vehicle 20 that has been released to the market.

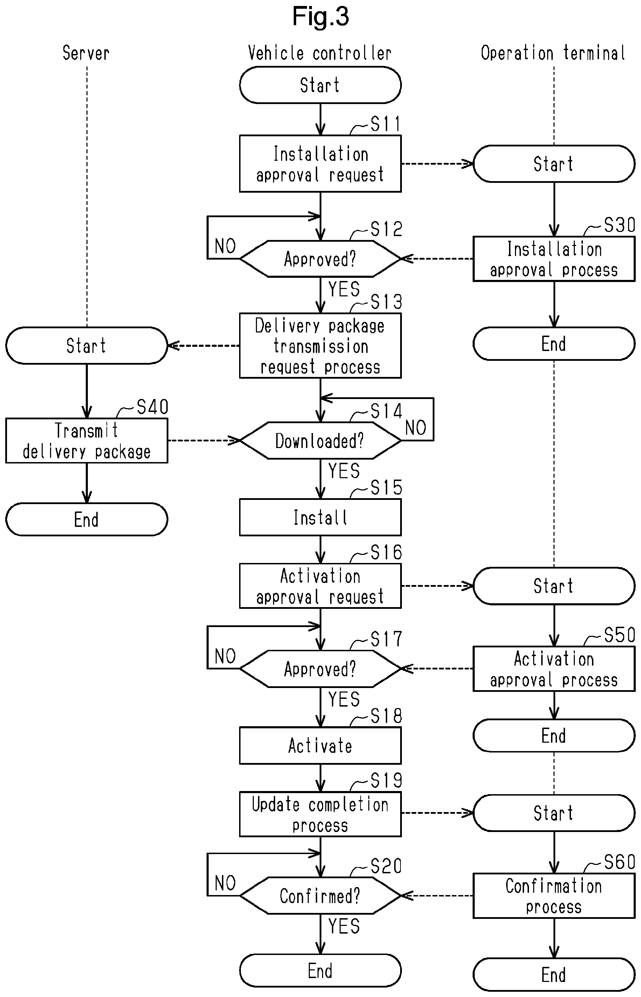

As shown in Fig. 3, upon starting the series of processes for the OTA update program, the vehicle controller 21 first executes the process in step S11. In step S11, the vehicle controller 21 requests the user of the vehicle 20 to approve the installation of the software update. Specifically, the vehicle controller 21 outputs an installation approval message to the operation terminal 23, presenting a query to the user on whether the software update may be installed. The installation approval message, for example, states: "Would you like to apply the new software?" Subsequently, the vehicle controller 21 advances the process to step S12.

When the installation approval message is received from the vehicle controller 21 and then an operation indicating the approval of installation of the software update is performed by the user, the operation terminal 23 executes an installation approval processing program. Upon starting the installation approval processing program, the operation terminal 23 executes step S30. In step S30, the operation terminal 23 executes an installation approval process. In the installation approval process, the operation terminal 23 outputs information indicating the user's approval to install the software update to the vehicle controller 21. The operation terminal 23 then terminates the installation approval processing program.

In step S12, the vehicle controller 21 determines whether the installation of the software update has been approved by the user. The vehicle controller 21 determines whether the installation of the software update has been approved by the user based on whether the information indicating the user's approval of the installation of the software update has been received from the operation terminal 23. When receiving no information indicating the user's approval from the operation terminal 23 (S12: NO), the vehicle controller 21 repeats the process of step S12. When receiving the information indicating the user's approval from the operation terminal 23 (S12: YES), the vehicle controller 21 advances the process to step S13.

In step S13, the vehicle controller 21 executes a distribution package transmission request process. In the distribution package transmission request process, the vehicle controller 21 transmits information indicating a request for a distribution package to the server 30 via the communication device 22. Subsequently, the vehicle controller 21 advances the process to step S14.

When receiving the information indicating a request for the distribution package from the communication device 22, the server 30 executes a distribution package transmission program. Upon starting the distribution package transmission program, the server 30 executes step S40. In step S40, the vehicle controller 21 transmits the distribution package to the communication device 22. The server 30 then terminates the distribution package transmission program.

In step S14, the vehicle controller 21 determines whether the communication device 22 has downloaded the distribution package. When the communication device 22 has not downloaded the distribution package (S14: NO), the vehicle controller 21 repeats the process of step S14. When the communication device 22 has downloaded the distribution package (S14: YES), the vehicle controller 21 advances the process to step S15.

In step S15, the vehicle controller 21 installs the distribution package downloaded by the communication device 22. The distribution package is a series of datasets transferred from the server 30 to the vehicle 20 at once. The distribution package includes display information of a human machine interface (HMI), package information, security information, and the like, in addition to the main component of the software update. Further, the distribution package includes the network information of the SDN system 50. That is, the distribution package includes the communication settings of each SDN controller 51. When the vehicle controller 21 downloads the distribution package, the SDN controller 51 downloads the communication settings of the SDN switches 53 included in the distribution package. When the vehicle controller 21 installs the software update from the distribution package, the SDN controller 51 installs the communication settings of the SDN switches 53 from the distribution package. Subsequently, the vehicle controller 21 advances the process to step S16.

In step S16, the vehicle controller 21 requests the user of the vehicle 20 to approve the activation of the installed software update. Specifically, the vehicle controller 21 outputs an activation approval message to the operation terminal 23, presenting a query asking for the approval of activation of the software update. The activation approval message is, for example, a message such as: "The update will take approximately XX minutes. During this time, the vehicle cannot be restarted. Do you wish to proceed?" Subsequently, the vehicle controller 21 advances the process to step S17.

When the activation approval message is received from the vehicle controller 21 and then an operation indicating the approval of activation of the software update is performed by the user, the operation terminal 23 executes an activation approval processing program. Upon starting the activation approval processing program, the operation terminal 23 executes the process of step S50. In step S50, the operation terminal 23 executes the activation approval process. In the activation approval process, the operation terminal 23 outputs information indicating the approval by the user to the vehicle controller 21. The operation terminal 23 then terminates the activation approval processing program.

In step S17, the vehicle controller 21 determines whether the activation of the software update has been approved by the user. Depending on whether the information indicating the approval by the user has been received from the operation terminal 23, the vehicle controller 21 determines whether the user has approved the activation of the software update. When receiving no information indicating the user's approval from the operation terminal 23 (S17: NO), the vehicle controller 21 repeats the process of step S17. When receiving information indicating the user's approval from the operation terminal 23 (S17: YES), the vehicle controller 21 advances the process to step S18.

In step S18, the vehicle controller 21 activates the installed software update. This allows the vehicle controller 21 to control the vehicle 20 based on the information related to the activated software update. When the vehicle controller 21 activates the software update, the SDN controller 51 activates the new communication settings of each SDN switch 53. Subsequently, the vehicle controller 21 advances the process to step S19.

In step S19, the vehicle controller 21 executes an update completion process. In the update completion process, the vehicle controller 21 outputs, to the operation terminal 23, information indicating that the update of the software based on the current campaign information is completed. Specifically, the vehicle controller 21 outputs, to the operation terminal 23, an update completion message indicating that the software update is completed. The update completion message is, for example, a message such as: "The update to the software has been completed." Subsequently, the vehicle controller 21 advances the process to step S20.

When the update completion message is received from the vehicle controller 21 and then an operation indicating the confirmation of completion of the software update is performed by the user, the operation terminal 23 executes a confirmation processing program. Upon starting the confirmation process program, the operation terminal 23 executes the process of step S60. In step S60, the operation terminal 23 executes a confirmation process. In the confirmation process, the operation terminal 23 outputs information indicating that the user has confirmed the completion of the software update to the vehicle controller 21. The operation terminal 23 then terminates the confirmation processing program.

In step S20, the vehicle controller 21 determines whether the user has confirmed the completion of the software update. Depending on whether information indicating that the user has confirmed the completion of the software update has been received from the operation terminal 23, the vehicle controller 21 determines whether the user has confirmed the completion of the software update. When receiving no information indicating that the user has confirmed the completion of the software update from the operation terminal 23 (S20: NO), the vehicle controller 21 repeats the process of step S20. When receiving information indicating that the user has confirmed the completion of the software update from the operation terminal 23 (S20: YES), the vehicle controller 21 terminates the series of processes.

### Series of Processes for Determination of Communication Error

As described above, when the vehicle controller 21 activates the software update based on the campaign information, the SDN controller 51 updates the communication settings of each SDN switch 53. This updates the path information, such as the data transfer destinations of each SDN switch 53. When the SDN controller 51 updates the communication settings of each SDN switch 53, the vehicle controller 21 executes a test program stored in the ROM.

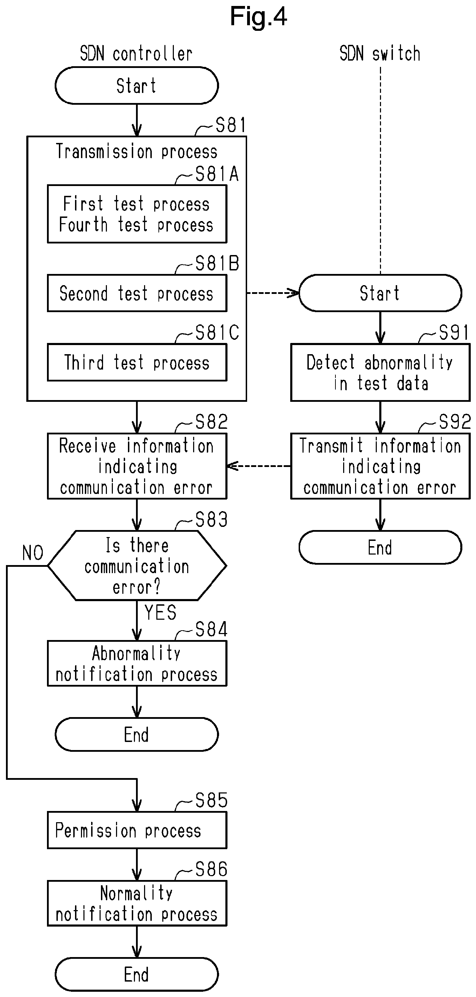

As shown in Fig. 4, when the vehicle controller 21 starts the test program, the SDN controller 51 first executes step S81. In step S81, the SDN controller 51 executes a transmission process. During the transmission process, the SDN controller 51 sends the test data to each SDN switch 53.

The transmission process includes a first test process, a second test process, a third test process, and a fourth test process. The SDN controller 51 executes all four of these processes when executing the transmission process. The communication settings of each SDN switch 53 specify the format of the data to be transmitted, the path to the destination physical ECU 21B, and the traffic volume used when transmitting data to the destination physical ECU 21B. The term "traffic volume" refers to the amount of data to be transmitted per unit of time.

Hereinafter, the data transmission path defined by the communication settings is referred to as the normal path. In other words, the normal path refers to a path through which data should be transmitted when the SDN 53 switch transmits the data. The data path that is not defined by the communication settings is referred to as the abnormal path. The abnormal path refers to a path through which data should not be transmitted when the SDN switch 53 transmits the data. Therefore, the abnormal path is different from the normal path.

Further, the data traffic volume defined by the communication settings is referred to as the normal traffic volume. In other words, the normal traffic volume is a traffic volume that the SDN switch 53 should send to the destination physical ECU 21B for predetermined data defined by the communication settings. The data traffic volume that is not defined by the communication settings is referred to as the abnormal traffic volume. In other words, the abnormal traffic volume is a traffic volume that the SDN switch 53 should not send to the destination physical ECU 21B for the predetermined data, which is defined by the communication settings.

Of the four test processes, the first test process transmits test data from the SDN controller 51 to the SDN switch 53 along the normal path. The second test process transmits test data from the SDN controller 51 to the SDN switch 53 along the abnormal path. The third test process sets the traffic volume of test data to the abnormal traffic volume and transmits the test data from the SDN controller 51 to the SDN switch 53. The fourth test process sets the traffic volume of test data to the normal traffic volume and transmits the test data from the SDN controller 51 to the SDN switch 53. When the SDN controller 51 transmits test data to the SDN switch 53, the SDN switch 53 transfers the test data to the physical ECU 21B.

Step S81 is divided into step S81A, step S81B, and step S81C. In step S81A, the SDN controller 51 sets the traffic volume of first test data to the normal traffic volume and transmits the first test data along the normal path. In other words, step S81A corresponds to the first test process and the fourth test process.

In step S81B, the SDN controller 51 executes the second test process. Specifically, the SDN controller 51 sets the traffic volume of second test data to the normal traffic volume and transmits the second test data along the abnormal path.

In step S81C, the SDN controller 51 executes the third test process. Specifically, the SDN controller 51 sets the traffic volume of third test data to the abnormal traffic volume and transmits the third test data along the normal path. After terminating the processes of steps S81A to S81C, the SDN controller 51 terminates the process of step S81. Subsequently, the SDN controller 51 advances the process to step S82.

When receiving test data from the SDN controller 51, the SDN switch 53 executes the process of step S91. In step S91, the SDN switch 53 detects whether there is any abnormality in each of the first to third test data transmitted by the transmission process. Specifically, the SDN switch 53 detects whether there is an abnormality by comparing the test data against an access control list. The access control list indicates the signals that can be transmitted to each physical ECU 21B. On this access control list, the signals that can be transmitted and the traffic volume that can be transmitted are individually configured for each type of hardware devices connected to the SDN switch 53. Therefore, when the type of physical ECU 21B differs, the signals that can be transmitted and the traffic volume that can be transmitted may also differ. The access control list is stored in advance in the ROM of the vehicle controller 21.

The SDN switch 53 compares the received test data against the access control list. When the path information of the test data differs from the path information in the access control list, the SDN switch 53 detects that there is a communication error in the path information of the test data on the abnormal path. When the path information of the test data matches the path information in the access control list, the SDN switch 53 detects that there is no communication error in the path information of the test data on the normal path.

When the traffic volume of the test data is greater than the traffic volume in the access control list, the SDN switch 53 detects that there is a communication error in the traffic amount of the test data in the abnormal traffic volume. When the traffic volume of the test data is less than or equal to the traffic volume in the access control list, the SDN switch 53 detects that there is no communication error in the traffic amount of the test data in the normal traffic volume.

After detecting whether there is a communication error in the test data received from the SDN controller 51, the SDN switch 53 advances the process to step S92.

In step S92, the SDN switch 53 transmits information indicating the communication error to the SDN controller 51. The information indicating a communication error indicates whether there is a communication error in the test data determined by the SDN switch 53 in step S91. Specifically, the information indicating a communication error indicates whether there is a communication error related to the path information of the test data and whether there is a communication error related to the traffic volume of the test data. In other words, the information indicating a communication error includes information indicating there is no communication error. The information indicating a communication error includes information indicating that whether there is a communication error relates to path information or traffic amount. Then, the SDN switch 53 terminates the series of processes in the present cycle.

In step S82, the SDN controller 51 receives information indicating the communication error from the SDN switch 53. Subsequently, the SDN controller 51 advances the process to step S83.

In step S83, the SDN controller 51 executes a determination process. The determination process determines whether a communication error has occurred in the communication by the transmission process. Specifically, the SDN controller 51 determines that no communication error has occurred in the communication settings when the following conditions are satisfied. The first condition is that no communication error has been detected in the normal path by the first test process. The second condition is that a communication error in the abnormal path has been detected by the second test process. The third condition is that a communication error has been detected under the abnormal traffic volume by the third test process. The fourth condition is that no communication error has been detected under the normal traffic volume by the fourth test process. Based on these four conditions, the SDN controller 51 determines that no communication error has occurred in the communication settings. When even one of the four conditions is not satisfied, the SDN controller 51 determines that a communication error has occurred.

When determining that a communication error has occurred in the communication by the transmission process (S83: YES), the SDN controller 51 advances the process to step S84. In step S84, the SDN controller 51 executes an abnormality notification process. In the abnormality notification process, the SDN controller 51 outputs information, to the operation terminal 23, indicating that the communication settings of each SDN switch 53 are abnormal. Subsequently, the SDN controller 51 terminates the series of processes.

When determining that no communication error has occurred in the communication by the transmission process (S83: NO), the SDN controller 51 advances the process to step S85. In step S85, a permission process is executed. In the permission process, the SDN controller 51 permits the transmission and reception of data other than test data based on the communication settings. Subsequently, the SDN controller 51 advances the process to step S86.

In step S86, the SDN controller 51 executes a normality notification process. In the normality notification process, the SDN controller 51 outputs information, to the operation terminal 23, indicating that the communication settings are normal. The normality notification process is executed together with the update completion process, which outputs information indicating that the above-described software update is completed. Upon receiving the normality notification and update completion information, the operation terminal 23 displays information indicating that the software update is completed and information indicating that the communication settings are normal. As a result, the SDN controller 51 completes the series of processes.

### Operation of Embodiment

In the above-described embodiment, when a software update is executed via OTA, the communication settings of the SDN switch 53 are updated. When the communication settings are updated, the SDN controller 51 initiates the test program. As a result, the SDN controller 51 executes the transmission process, which includes the first test to fourth test processes. Based on the information indicating a communication error from the SDN switch 53, the SDN controller 51 determines whether there is a communication error in the updated communication settings.

### Advantages of Embodiment

(1) In the above-described embodiment, in the determination process of step S83, the SDN controller 51 determines that no communication error has occurred in the communication settings on condition that no communication error has been detected in the normal path by the first test process. When determining that no communication error has occurred in the communication settings, the SDN controller 51 executes the permission process in step S84. Thus, the transmission and reception of data other than test data is permitted only after confirming that no communication error has occurred in the normal path (i.e., confirming that communication can be normally executed in the normal path). Accordingly, when updating the communication settings and then transmitting data other than test data, the network of the SDN system 50 operates normally in the normal path of the communication settings.
(2) In the above-described embodiment, in the determination process of step S83, the SDN controller 51 determines that no communication error has occurred in the communication settings on condition that a communication error has been detected in the abnormal path by the second test process. Thus, in the updated communication settings, signals are neither transmitted nor received on the abnormal path that should not be operating. Accordingly, in the updated communication settings, communication via the normal path is accurately treated as correct communication, while communication via the abnormal path is accurately treated as communication in which an error has occurred.
(3) In the above-described embodiment, in the determination process of step S83, the condition that the SDN controller 51 determines that no communication error has occurred in the communication settings further includes the following conditions. These conditions include the condition that a communication error has been detected under the abnormal traffic volume by the third test process and the condition that no communication error has been detected under the normal traffic volume by the fourth test process. As a result, the updated communication settings allows for transmission and reception of data with a proper traffic amount.
(4) In the above-described embodiment, when a software update is executed via OTA, the SDN controller 51 updates the communication settings. The SDN controller 51 executes the transmission process and the subsequent determination processes when the communication settings are updated. Therefore, the SDN controller 51 initiates the test program at a relatively early stage subsequent to the update of the communication settings. This prevents the time to confirm whether a communication error has occurred in the communication settings since the update of the communication settings from becoming too long.
(5) In the above-described embodiment, the SDN controller 51 executes the normality notification process after the permission process. Additionally, when receiving the normality notification, the operation terminal 23 displays information indicating that the communication settings are normal. This allows the user of the vehicle 20 to confirm with certainty that there are no issues with the communication settings.

### Modifications

The above-described embodiment may be modified as follows. The above-described embodiment and the following modifications can be combined as long as the combined modifications remain technically consistent with each other.

### Series of Processes for Determination of Communication Error

During the transmission process, the SDN controller 51 executes the process of step S81A including the first test process and the fourth test process. Instead, the SDN controller 51 may transmit test data in the fourth test process independently from the first test process. As long as communication errors caused by the data transmission path are distinguishable from those caused by the data traffic volume, the SDN controller 51 may execute the fourth test process to, for instance, transmit test data with the normal traffic volume to the abnormal path.

In the transmission process, the SDN controller 51 may omit the third test process and the fourth test process. In this case, the determination process causes the SDN controller 51 to make a determination regardless of the traffic volume.

In the transmission process, the SDN controller 51 may omit the second test process. In this case, the determination process causes the SDN controller 51 to make a determination for the abnormal path regardless of the communication error. Therefore, during the transmission process, the SDN controller 51 only needs to execute at least the first test process. In the determination process, the SDN controller 51 only needs to determine that there is no communication error in the communication settings on condition that no communication error has been detected in the normal path.

In the above-described embodiment, the SDN switch 53 detects whether there is an abnormality in the test data through comparison with the access control list. Instead, for example, the physical ECU 21B to which test data has been transferred from the SDN switch 53 may detect a communication error while filtering the test data. Filtering is a process that determines whether the type of data and the volume of traffic conform to predefined criteria. The physical ECU 21B sends a signal indicating the communication error to the SDN controller 51 of the master ECU 21A, thereby allowing the SDN controller 51 to check whether the communication error has been detected in the test data.

For example, when conducting a test process using test data of the traffic volume, the SDN controller 51 may check whether the test process is normal or abnormal as follows. Specifically, the comparison of data transmission latency, throughput, and other metrics between a case in which test data with the abnormal traffic volume is sent and a case in which test data with the normal traffic volume is sent allows for determination of whether the test process is normal or abnormal. In other words, in the case of test data with the abnormal traffic volume, compared to test data with the normal traffic volume, changes occur such that latency arises in data transmission and reception or the throughput of data transmission and reception reaches its maximum limit. In this case, the SDN controller 51 determines that the test process is abnormal when the test data with the abnormal traffic volume has been sent and determines that the test process is normal when the test data with the normal traffic volume has been sent.

The time at which the SDN controller 51 starts to execute a test program is not limited to the time at which the software is updated via OTA. For example, the SDN controller 51 may execute the transmission process when the power source of the vehicle 20 is turned on. When the power source of the vehicle 20 is off, a new hardware device may be connected or existing ones may be modified. Therefore, when the power source of the vehicle 20 is turned on, by executing the test program, the SDN controller 51 may determine whether there is a communication error before the vehicle 20 begins traveling.

Alternatively, for example, the SDN controller 51 may execute the transmission process upon receiving a signal to switch the electronic control units mounted on the vehicle 20 to an operable state. The electronic control units include, for example, the physical ECUs 21B. There may be a case in which the physical ECUs 21B are set to be non-operational when the vehicle 20 is shipped, while after the vehicle 20 leaves the warehouse, the physical ECUs 21B are switched to an operable state, for example, by a car dealer, upon payment of additional fees. In such a case, the communication settings may be changed by initiating the physical ECUs 21B. Thus, upon receiving a signal from a car dealer or the like to switch the physical ECUs 21B to an operable state, the SDN controller 51 executes the test program. This allows for determination of whether there is a communication error in the communication settings when a new physical ECU 21B is activated. A signal used to switch an electronic control unit to an operable state may be referred to as, for example, a wake-up signal.

### Series of Processes Related to OTA

After step S18, the vehicle controller 21 may execute a permission determination process that determines whether the permission process of step S85 in the test program has been executed. When the permission process is executed through the permission determination process, the vehicle controller 21 may advance the process to step S19. In step S19, a signal indicating that the communication settings, which are confirmed as normal in the normality notification process of step S86, may also be transmitted to the operation terminal 23. If the permission process is not executed through the permission determination process within a predetermined period that has been set in advance, the vehicle controller 21 may execute a process that outputs information indicating that the update is incomplete to the operation terminal 23, instead of executing the update completion process. In this case, the condition for executing step S19 is that the permission process has been completed by running the test program. During the update completion process, a signal indicating that the communication settings are normal is also sent to the operation terminal 23. This allows the user who checks the operation terminal 23 to confirm that the software update is completed and that the communication settings are normal at the same time.

### Others

The vehicle 20 is not limited to one that forms the communication system 10. As in the above-described modifications, it is sufficient for the vehicle 20 to execute the test programs and it is not limited to cases where the software is updated via OTA.

The vehicle controller 21 may include circuitry including one or more processors that execute various processes according to computer programs (software). The vehicle controller 21 may be circuitry including one or more dedicated hardware circuits such as application specific integrated circuits (ASICs) that execute at least part of various processes or including a combination thereof. The processor includes a CPU and a memory such as a RAM and a ROM. The memory stores program codes or instructions configured to cause the CPU to execute the processes. The memory, or a computer-readable medium, includes any type of media that are accessible by general-purpose computers and dedicated computers. The media include a non-transitory computer-readable storage medium that stores a program for causing a processor to execute a control process. The control process includes, for example, a control process within an SDN system.

In the transmission process, the SDN controller 51 may execute at least one selected from the first test process to the fourth test process. In the transmission process, the types of test process executed by the SDN controller 51 are not limited to the first to fourth test processes. The types of test processes may be set depending on the communication settings in the flow table.

## Claims

1. An SDN system for a vehicle, the SDN system comprising:
an SDN switch; and
an SDN controller, wherein
the SDN controller includes control circuitry configured to execute:
controlling communication settings of the SDN switch;
a transmission process that transmits test data;
a determination process that determines whether a communication error has occurred during the transmission process in the communication settings; and
a permission process that permits transmission and reception of data other than the test data in the communication settings when the determination process determines that the communication error has not occurred, wherein
a normal path is a transmission path for the data and is defined by the communication settings,
the transmission process includes a first test process,
the first test process transmits the test data from the SDN controller to the SDN switch along the normal path, and
the determination process determines that the communication error in the communication settings has not occurred on condition that the communication error in the normal path has not been detected during the first test process.

2. The SDN system according to claim 1, wherein
an abnormal path is a transmission path for the data and is not defined by the communication settings,
the transmission process includes a second test process,
the second test process transmits the test data from the SDN controller to the SDN switch along the abnormal path, and
the determination process determines that the communication error in the communication settings has not occurred on condition that the communication error in the abnormal path has been detected during the second test process.

3. The SDN system according to claim 1 or 2, wherein
a normal traffic volume is a traffic volume of the data and is defined by the communication settings,
an abnormal traffic volume is a traffic volume of the data and is not defined by the communication settings,
the transmission process includes a third test process and a fourth test process,
the third test process transmits the test data of the abnormal traffic volume from the SDN controller to the SDN switch,
the fourth test process transmits the test data of the normal traffic volume from the SDN controller to the SDN switch,
the determination process determines that the communication error in the communication settings has not occurred on condition that:
the communication error in the abnormal traffic volume has been detected in the third test process; and
the communication error in the normal traffic volume has not been detected in the fourth test process.

4. The SDN system according to any one of claims 1 to 3, wherein
the SDN controller is configured to execute the transmission process when a power source of the vehicle is turned on.

5. The SDN system according to any one of claims 1 to 3, wherein
the vehicle includes one or more electronic control units, and
the SDN controller is configured to execute the transmission process when receiving a signal that switches the electronic control unit to an operable state.

6. The SDN system according to any one of claims 1 to 3, wherein
the SDN controller is capable of executing a download process,
the download process downloads a software update from a server outside the vehicle, and
the SDN controller is configured to execute the transmission process when the software update downloaded by the download process is activated.

7. The SDN system according to claim 6, wherein
the SDN controller is configured to execute a normality notification process after the permission process, and
the normality notification process outputs a signal indicating that the communication settings are normal.

8. An SDN controller comprising control circuitry configured to execute:
controlling communication settings of an SDN switch;
a transmission process that transmits test data;
a determination process that determines whether a communication error has occurred during the transmission process in the communication settings; and
a permission process that permits transmission of data other than the test data in the communication settings when the determination process determines that the communication error has not occurred, wherein
a normal path is a transmission path for the data and is defined by the communication settings,
the transmission process includes a first test process, the first test process transmitting the test data to the SDN switch along the normal path, and
the determination process determines that the communication error has not occurred in the communication settings on condition that the communication error in the normal path has not been detected during the first test process.

9. A control method for an SDN system in a vehicle, the control method comprising:
controlling, by an SDN controller including control circuitry, communication settings of an SDN switch, the SDN system including the SDN controller and the SDN switch;
transmitting, by the SDN controller, test data from the SDN controller to the SDN switch along the normal path, the normal path being a transmission path for data other than the test data and being defined by the communication settings,
determining, by the SDN controller, that a communication error in the communication settings has not occurred on condition that a communication error in the normal path has not been detected; and
permitting, by the SDN controller, transmission and reception of the data other than the test data in the communication settings when determining that the communication error has not occurred.
